# EUROPEAN PATENT APPLICATION

(11) **EP 3 543 905 A1**
(43) Date of publication of application: **25.09.2019**
(21) Application number: 19162608.4
(22) Date of filing: 13.03.2019
(51) Int. Cl.: G06K 9/00, G08G 1/16

(54) **SYSTEM AND METHOD TO DETERMINE SIZE OF VEHICLE CARRYING CARGO**

(30) Priority: 19.03.2018 US 201862644865 P; 20.03.2018 US 201815926139
(71) Applicant: Aptiv Technologies Limited, St. Michael (BB)
(72) Inventor: HILNBRAND, Brian, R, MOUNTAIN VIEW, CALIFORNIA 94043 (US); LAUR, Michael, H, MISSION VIEJO, CALIFORNIA 92692 (US); AGARWAL, Divya, SEATTLE, WASHINGTON 98102 (US); MANGAL, Nandita, Palo Alto, California 94301 (US)
(74) Representative: Manitz Finsterwald Patent- und Rechtsanwaltspartnerschaft mbB

(57) **Abstract**

A system (10) includes a camera (26) and a controller-circuit (30). The camera (26) renders a present-image (28) of a host-vehicle (12) loaded with cargo (18). The present-image (28) depicts the host-vehicle (12) and the cargo (18) carried by the host-vehicle (12). The cargo (18) protrudes beyond a base-outline (20) of the host-vehicle (12) without cargo (18). The controller-circuit (30) is in communication with the camera (26). The controller-circuit (30) is configured to determine, in accordance with the present-image (28), a size (24) of the host-vehicle (12) and the cargo (18) combined. The size (24) is indicative of at least one of a length (24A) of the host-vehicle (12) and the cargo (18) combined, a height (24B) of the host-vehicle (12) and the cargo (18) combined, and a width (24C) of the host-vehicle (12) and the cargo (18) combined. The controller-circuit (30) is also configured to operate the host-vehicle (12) in accordance with the size (24).

## Description

### TECHNICAL FIELD OF INVENTION

This disclosure generally relates to a system and method for operating a vehicle, and more particularly relates to determining, in accordance with a present-image, a size of a host-vehicle and cargo carried by the host-vehicle combined.

### SUMMARY

According to the invention, a system for determining the overall size of a host-vehicle plus any cargo attached to, carried by or transported by the host-vehicle comprises a camera that renders a present-image of a host-vehicle loaded with cargo, said present-image depicts the host-vehicle and the cargo carried by the host-vehicle, said cargo protrudes beyond a base-outline of the host-vehicle without cargo; a controller-circuit in communication with the camera, said controller-circuit configured to determine, in accordance with the present-image, a size of the host-vehicle and the cargo combined, said size indicative of at least one of a length of the host-vehicle and the cargo combined, a height of the host-vehicle and the cargo combined, and a width of the host-vehicle and the cargo combined, said controller-circuit configured to operate the host-vehicle in accordance with the size.

The camera may be operated by an operator of the host-vehicle, and the present-image may be communicated to the controller-circuit from the camera. The camera may be part of infrastructure, and the present-image may be transmitted to the controller-circuit from the infrastructure. The camera may be located on an other-vehicle, and the present-image may be transmitted to the controller-circuit from the other-vehicle.

The system may include a transceiver that broadcasts an image-request. The system may include a transceiver that broadcasts the size.

The system may include an image-library that specifies an identity of cargo depicted in a stored-image of the host-vehicle with cargo. The system may add the present-image to the image-library in response to a determination that the cargo depicted in the present-image does not correspond to any stored-image in the image-library. The system may request characteristic of the cargo in response to a determination that the cargo depicted in the present-image does not correspond to any stored-image in the image-library.

According to the invention, the controller-circuit may comprise: a camera that renders a present-image of a host-vehicle loaded with cargo, said present-image depicts the host-vehicle and the cargo carried by the host-vehicle, said cargo protrudes beyond a base-outline of the host-vehicle without cargo; a processor in communication with the camera, said processor configured to determine, in accordance with the present-image, a size of the host-vehicle and the cargo combined, said size indicative of at least one of a length of the host-vehicle and the cargo combined, a height of the host-vehicle and the cargo combined, and a width of the host-vehicle and the cargo combined, said processor configured to operate the host-vehicle in accordance with the size.

The processor may be configured to communicate with a transceiver that broadcasts an image-request. The processor may be configured to communicate with a transceiver that broadcasts the size. The processor may be configured to communicate with an image-library that specifies an identity of cargo depicted in a stored-image of the host-vehicle with cargo. The processor may add the present-image to the image-library in response to a determination that the cargo depicted in the present-image does not correspond to any stored-image in the image-library. The processor may request characteristics of the cargo in response to a determination that the cargo depicted in the present-image (28) does not correspond to any stored-image in the image-library.

According to the invention, a method of operating the system described above comprises: rendering, with a camera, a present-image of a host-vehicle loaded with cargo, said present-image depicts the host-vehicle and the cargo carried by the host-vehicle, said cargo protrudes beyond a base-outline of the host-vehicle without cargo; determining, in accordance with the present-image, a size of the host-vehicle and the cargo combined, said size indicative of at least one of a length of the host-vehicle and the cargo combined, a height of the host-vehicle and the cargo combined, and a width of the host-vehicle and the cargo combined; and operating the host-vehicle in accordance with the size .

The method may include broadcasting an image-request with a transceiver. The method may include broadcasting the size with a transceiver. The method may include comparing the present-image to a stored-image of the host-vehicle with cargo, said stored-image in an image-library that specifies an identity of cargo depicted in the stored-image. The method may include adding the present-image to the image-library in response to a determination that the cargo depicted in the present-image does not correspond to any stored-image in the image-library. The method may include requesting characteristics of the cargo in response to a determination that the cargo depicted in the present-image does not correspond to any stored-image in the image-library.

According to the invention, a first device comprises: one or more processors; memory; and one or more programs stored in memory, the one or more programs including instructions for performing the method described above.

According to the invention, a non-transitory computer-readable storage-medium comprises one or more programs for execution by one or more processors of a first device, the one or more programs including instructions which, when executed by the one or more processors, cause the first device to perform the method described above.

### BRIEF DESCRIPTION OF DRAWINGS

The present invention will now be described, by way of example with reference to the accompanying drawings, in which:
Fig. 1 is a diagram of a system in accordance with one embodiment; and
Fig. 2 is an image rendered by a camera of the system of Fig. 1 in accordance with one embodiment; and
Fig. 3 is method of operating the system of Fig. 1 in accordance with one embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

'One or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

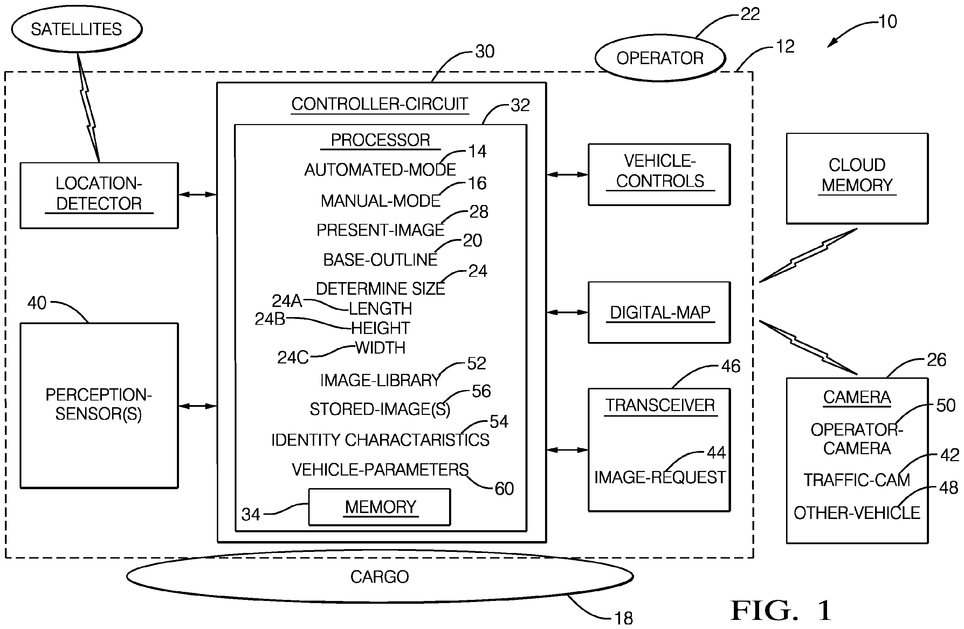

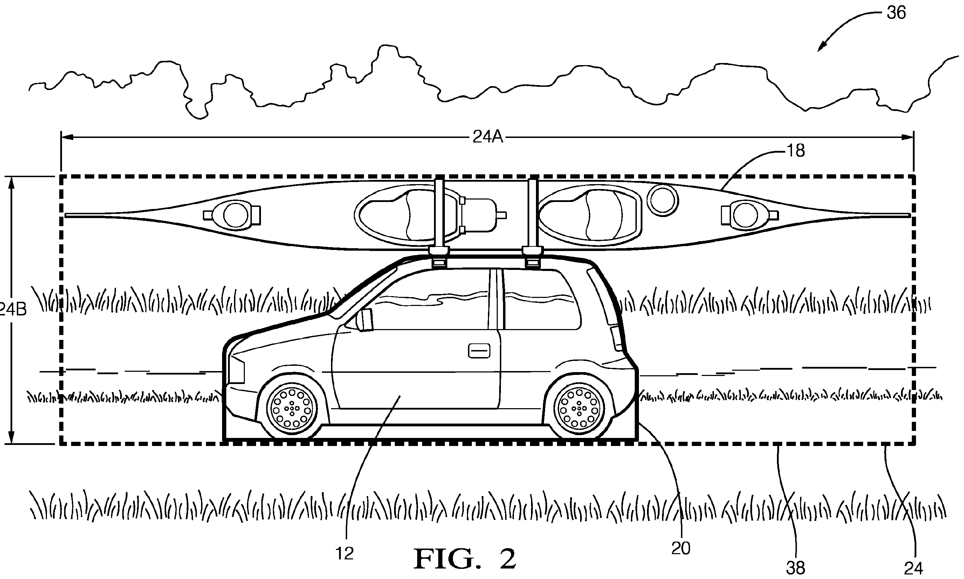

Fig. 1 illustrates a non-limiting example of a system 10 that determines the overall size, hereafter the size 24 (see also Fig. 2), of a host-vehicle 12 plus any cargo 18 attached to, carried by or transported by the host-vehicle 12. As used herein, the cargo 18 is any object(s) attached to, supported on ,carried on, tied on, affixed to, magnetically connected to the outside of the host-vehicle 12, i.e. cargo 18 carried or transported by the host-vehicle 12 that protrudes beyond a base-outline 20 (see also Fig. 2) of the host-vehicle 12, and operate the host-vehicle 12 accordingly. As such, any instance of a trailer towed by the host-vehicle 12 is not cargo as a trailer is not carried by the host-vehicle 12. By way of further example, any object that makes direct contact with the ground while the host-vehicle 12 is moving would not be an example of cargo. Non-limiting examples of the cargo 18 include, but are not limited to, a kayak, lumber, a ladder, and a mattress that are attached to or mounted upon the host-vehicle 12. The cargo 18 can also include any mounting devices, racks, or supports that are attached to the host-vehicle 12 for the purpose of mounting or securing the actual cargo being transported.

The host-vehicle 12 may be characterized as an automated vehicle. As used herein, the term automated vehicle may apply to instances when the host-vehicle 12 is being operated in an automated-mode 14, i.e. a fully autonomous mode, where an operator 22 of the host-vehicle 12 may do little more than designate a destination to operate the host-vehicle 12. However, full automation is not a requirement. It is contemplated that the teachings presented herein are useful when the host-vehicle 12 is operated in a manual-mode 16 where the degree or level of automation may be little more than providing an audible or visual warning to the operator 22 who is generally in control of the steering, accelerator, and brakes of the host-vehicle 12. For example, the system 10 may merely assist the operator 22 as needed to change lanes and/or avoid interference with and/or avoid a collision with, for example, an object such as an other-vehicle, a pedestrian, a bi-cyclist, a road sign, or other protruding cargo. That the system 10 has knowledge of the size 24 is advantageous to avoid a collision of the cargo 18 with any of the aforementioned objects. For example, the system 10 may determine that the host-vehicle 12 cannot make use of a parking-place that is too small for the size 24 of the host-vehicle 12 and the cargo 18 combined, even though the parking-place in question would be large enough to accommodate the host-vehicle 12 without the cargo 18.

To determine the size 24, the system 10 includes a camera 26 that renders a present-image 28 of a host-vehicle 12 loaded with the cargo 18. Accordingly, the present-image 28 depicts the combination of the host-vehicle 12 and the cargo 18 carried by the host-vehicle 12. As discussed above, the cargo 18 is mounted on or carried by or attached to the host-vehicle 12, and the cargo 18 protrudes beyond the base-outline 20 of the host-vehicle 12 without the cargo 18. The present-image 28 may consist of a single image (i.e. single snap-shot) taken from one perspective, or may include multiple images from multiple perspectives so a three-dimensional (3D) model of the cargo 18 can be determined. Alternatively, the present-image 28 may be a video-stream so that multiple images from distinct perspectives may be extracted and used to determine the 3D model. Since the camera 26 renders an image from a perspective such as that shown in Fig. 2, the camera 26 is not mounted on the host-vehicle 12 at the time the present-image 28 is rendered, i.e. taken. More discussion of the camera 26 is presented later in this disclosure.

The system 10 includes a controller-circuit 30 in communication with the camera 26. The communication may be by way of wires, optical fiber, portable memory or wireless communications such as but not limited to Bluetooth Wi-Fi, Cellular, RF of any possible frequency, or optical frequencies. The controller-circuit 30, hereafter sometimes referred to as the controller 30, may include one or more instances of a processor 32 such as one or more instances of a microprocessor or other control circuitry such as analog and/or digital control circuitry including an application specific integrated circuit (ASIC) for processing data as should be evident to those in the art. While the system 10 described herein is generally described in terms of having a single instance of the controller 30, it is recognized that the functions of the controller 30 may be shared or distributed among several instances of controllers that are each configured for some specific task. Hereafter, any reference to the controller 30 being configured for something is to also be interpreted as suggesting that the processor 32 may also be configured for the same thing. The controller 30 may include memory 34, i.e. non-transitory computer-readable storage-medium, including non-volatile memory, such as electrically erasable programmable read-only memory (EEPROM) for storing one or more routines, thresholds, and captured data. The memory 34 may be part of the processor 32, or part of the controller 30, or separate from the controller 30 such as cloud memory, i.e. remote memory stored in the cloud. The one or more routines may be executed by the controller 30 or the processor 32 to perform steps for determining the size 24 and/or other information about the cargo 18 based on signals received by the controller 30 from the camera 26 and/or other sources as described herein. The processor 32 or part of the controller 30 may include a Graphical Processing Unit (GPU) or General Graphical Processing Unit, (GGPU) or other specialized hardware for the purpose of image processing.

The controller-circuit 30 is configured to determine, in accordance with the present-image 28, the size 24 of the host-vehicle 12 and the cargo 18 combined. The size 24 may be indicative of a length 24A, and/or a height 24B, and/or a width 24C of the host-vehicle 12 and the cargo 18 combined. For example, as suggested in Fig. 2, the size 24 may only need to describe the length 24A and the height 24B as the kayak is not wider than the host-vehicle 12. The camera 26 may include a range-finder function that indicates the distance between the camera 26 and the host-vehicle 12. Given the distance and information about the lens of the camera 26, the length 24A and height 24B can be determined from the image 36 of Fig. 2 by, for example, using known image-processing techniques to draw a bounding-box 38 around the combination of the host-vehicle 12 and the cargo 18. Alternatively, the size 24 may be determined based on known dimensions of the host-vehicle 12. That is, the controller 30 may have been previously programmed with the length, height and width of the base-outline 20 of the host-vehicle 12 without cargo. Then the image 36 (i.e. the present-image 28) can be analyzed so the length of the kayak (the cargo 18 in Fig. 2) can be determine based on a proportional comparison to the length of the host-vehicle 12. That is, the controller 30 compares the present-image 28 to a previously stored example of the base-outline 20 of the host-vehicle 12 to determine the size 24. The base-outline 20 may include multiple images that comprise multiple states of the host-vehicle 12 that incorporate body modifications and/or movable body parts that dynamically change shape/position based on driving scenario, e.g. speed.

The controller-circuit 30 is configured to operate the host-vehicle 12 in accordance with the size 24. For example, depending on the mode of operation (automated-mode 14 or manual-mode 16) the controller 30 may be configured to warn the operator 22 (if operating in the manual-mode 16) or avoid (e.g. steer around if operating in the automated-mode 14) low-clearance objects or areas. As another example, the controller 30 may extend a keep-out-zone behind the host-vehicle 12 for back-up/parking operations if the cargo 18 is longer than the host-vehicle 12, and/or extend the keep-out-zone beside the host-vehicle 12 for passing pedestrians, bicycles, other vehicles if the cargo 18 is wider than the host-vehicle 12. The controller 30 may extend keep-out-zone in front of the host-vehicle 12 to avoid getting to close to objects ahead of the host-vehicle 12 because the kayak (or lumber) on top of the host-vehicle 12 protrudes into a wall or another car ahead of the host-vehicle 12. As another non-limiting example, the controller 30 may avoid turning into narrow roadways if cargo 18 is too wide. As another non-limiting example, the controller 30 may avoid height, width, and length restricted areas such as parking garages, tunnels, over passes, overhead utility lines, traffic lights, home garages, overhanging trees and drive thru businesses.

In one embodiment, the camera 26 may be held and operated by the operator 22 of the host-vehicle 12 while the operator 22 is standing at some distance from the host-vehicle 12, and the present-image 28 is communicated to the controller-circuit 30 from the camera 26 via a wired, wireless, or portable memory connection. That is, the operator 22 may hold the camera 26 to capture the present-image 28 of the host-vehicle 12 after the cargo 18 is loaded. The operator 22 may position the camera 26 (i.e. the operator-camera 50) in accordance with some written or verbal communication from the controller 30. Alternatively, it is contemplated that the perception-sensor 40 (e.g. radar, lidar, on-board camera, or any combination thereof) of the host-vehicle 12 may be used to measure the distance to the operator 22 or the camera 26 while the operator 22 is holding the camera 26 outside of the host-vehicle 12, and the controller 30 could broadcast instructions to the operator 22 regarding where to move (e.g. closer, further away, move left, or move right) with respect to the host-vehicle 12. In one example, the camera 26 may be part of a smart-phone or personal communication device carried by the operator 22. Alternatively, the camera 26 may normally be part of the perception-sensor 40, but is configured to be temporarily removed by the operator 22 so the present-image 28 can be rendered (i.e. taken or captured), and then re-installed into the host-vehicle 12 to be used to operate the host-vehicle 12.

In another embodiment, the camera 26 may be part of infrastructure 42, e.g. a traffic monitoring camera (traffic-cam 42) that is positioned to observe traffic, e.g. mounted on a traffic-signal at an intersection. The present-image 28 is transmitted to the controller-circuit 30 from the infrastructure 42. The present-image 28 may be transmitted in response to an image-request 44 broadcast by a transceiver 46 of the host-vehicle 12. It is also contemplated that images of an area occupied by the host-vehicle 12 may be broadcast by the infrastructure 42 as part of normal information provided to vehicles for various modes of operation, e.g. automated or manual. Receiving all or part of the present-image 28 from the infrastructure 42 may be instead of, or in addition to, receiving all or part of the present-image 28 from the operator-camera 50.

In another embodiment, the camera 26 may be located on an other-vehicle 48, and the present-image 28 may be transmitted to the controller-circuit 30 from the other-vehicle 48. The other-vehicle 48 may transmit the present-image 28 in response to an image-request 44 broadcast by the transceiver 46 of the host-vehicle 12, where the image-request 44 is broadcast to the other-vehicle 48 because the other-vehicle 48 is positioned relative to the host-vehicle 12 such that the present-image 28 rendered by the camera 26 of the other-vehicle 48 is from a particularly useful perspective. Receiving all or part of the present-image 28 from the other-vehicle 48 may be instead of, or in addition to, receiving all or part of the present-image 28 from the operator-camera 50.

In another embodiment, the camera 26 may be located at a cargo-facility (not shown) where one or more instances of the camera 26 may render the present-image 28 from one or more perspectives as part of cargo loading service center. That is, the present-image 28 may be provided by the cargo loading service center as part of the cargo loading service.

It is also contemplated that the transceiver 46 may be used to broadcast the size 24 so that other vehicles traveling near the host-vehicle 12 while carrying the cargo 18 will be aware of the size 24 and as necessary avoid getting too close to the host-vehicle 12 while carrying the cargo 18 even though host-vehicle 12 by itself is smaller than the size. The transceiver 46 may operate in accordance with, for example but not limited to, dedicated-short-range-communications (DSRC), cellular-phone network communications, or Wi-Fi communications, as will be recognized by those in the wireless communication arts.

While the system 10 could be configured so that the present-image 28 must include multiple perspectives so a 3D model of the cargo 18 can be determined each time the cargo is loaded onto the host-vehicle 12, this is considered to be inefficient. Advantageously, the system 10 may include an image-library 52 that specifies an identity 54 of the cargo 18 depicted in a stored-image 56 of the host-vehicle 12 loaded with the cargo 18. By way of example and not limitation, the identity 54 may include a name of the cargo 18, e.g. kayak, bicycle, lumber, ladder, which may be specified or entered by the operator 22. The controller 30, or the processor 32, may compare the present-image 28, or a 3D model based on the present-image 28, to prior instances of images and/or an image-catalog of stock images that form the image-library 52. The advantage of having the image-library 52 to compare to an image captured by the camera 26 is that it may be sufficient to capture an image from a single perspective to accurately identify the cargo. That is, if the image 36 from Fig. 2 is compared to the stored-images 56 of the image-library, and the kayak was previous transported by the host-vehicle 12, only the image 36 from Fig. 2 may be necessary for the kayak to be properly identified.

If the cargo 18, e.g. the kayak, is a new instance of cargo so the present-image 28 does not correspond to any instance of the stored-images 56, then the system 10 may update the image-library 52 accordingly. That is, the system 10 may be configured to add the present-image 28 to the image-library 52 in response to a determination that the cargo 18 depicted in the present-image 28 does not correspond to any instance of the stored-images 56 in the image-library 52. I.e. the controller 30, or the processor 32, updates the image-library 52 when the cargo 18 is unknown. It is contemplated that a newly stored instance of the present-image 28 can be matched to an offboard image-library of objects determined by annotation and convolutional neural networks.

If the cargo 18 is unknown, i.e. the present-image 28 does not correspond to any instance of the stored-images 56 in the image-library 52, it is contemplated that the system 10 may be configured to request that one or more characteristics 58 of the cargo 18 be provided, for example by the operator 22, in response to a determination that the cargo 18 depicted in the present-image 28 does not correspond to any stored-image 56 in the image-library 52. The one or more characteristics 58 may include the weight of the cargo 18, which may be manually entered by the operator 22 or measured by sensors on cargo-rack or vehicle-suspension. The weight information may be used to adjust vehicle-parameters 60 such as, but not limited to, suspension damping and/or spring preload/load-leveling and/or adjust operating parameters of the host-vehicle 12. For example, the operating parameters may include, but are not limited to, reduced cornering speed or reduced maximum speed if cross-wind detected by swerving of host-vehicle 12

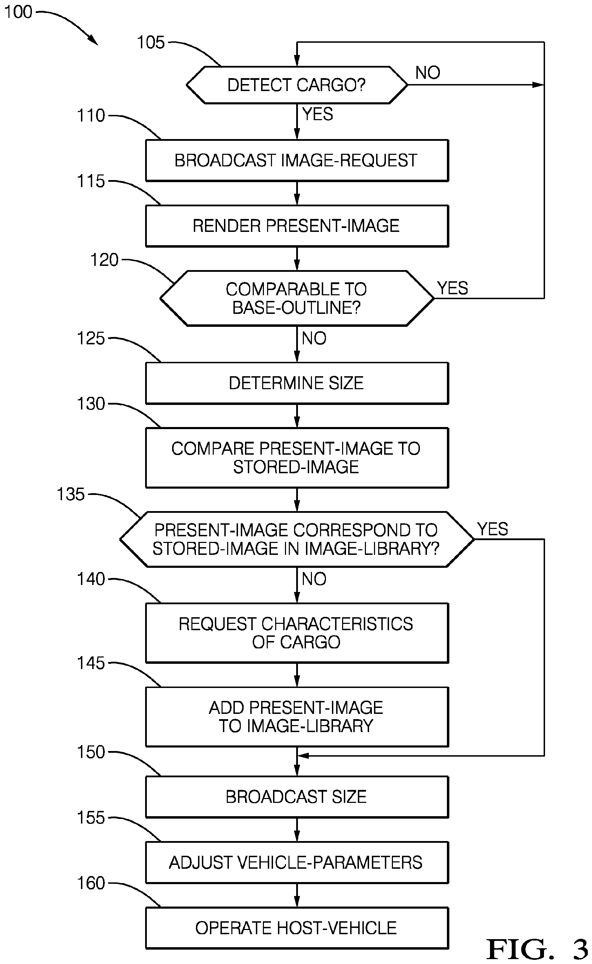

Fig. 3 illustrates a non-limiting example of a method 100 of operating the system 10.

Step 105, DETECT CARGO?, may include the operator 22 indicating to the system 10 that cargo 18 has been loaded onto the host-vehicle 12. Alternatively, the presence of the cargo 18 may be detected by a weight sensor on a luggage rack or detected by a compression of the suspension of the host-vehicle 12. Alternatively, the perception-sensors 40 (camera, radar, lidar) of the host-vehicle 12 may be able to detect the presence of some object such as the kayak when such an object is loaded onto the host-vehicle 12. If no cargo is detected or indicated, the method 100 continues to try to detect cargo.

Step 110, BROADCAST IMAGE-REQUEST, may include broadcasting an image-request 44 with the transceiver 46 in response to the presence of the cargo 18 being detected in step 105. The image-request 44 may be directed to the operator 22, e.g. sent to a smart-phone carried by the operator 22, or may be directed to the infrastructure 42 and/or an other-vehicle 48 proximate to (e.g. within 25 meters of) the host-vehicle 12.

Step 115, RENDER PRESENT-IMAGE, may include rendering, with a camera 26, a present-image 28 of a host-vehicle 12 loaded with cargo 18. The present-image 28 depicts the host-vehicle 12 and the cargo 18 carried by the host-vehicle. The cargo 18 protrudes beyond a base-outline 20 of the host-vehicle 12 without cargo.

Step 120, COMPARABLE TO BASE-OUTLINE?, may include the controller 30 or the processor 32 using a known image processing algorithm to determine if the cargo 18 does indeed protrude beyond the base-outline 20 of the host-vehicle 12, where the base-outline 20 is based on an image of the host-vehicle 12 when there is no cargo loaded on the host-vehicle 12. If the cargo 18 does not affect the outline, i.e. is comparable to the base-outline 20 (YES), then the method 100 returns to step 105. Otherwise, (NO) the size 24 is determined.

Step 125, DETERMINE SIZE, may include determining, in accordance with the present-image 28, a size 24 of the host-vehicle 12 and the cargo 18 combined. The size 24 is indicative of at least one of a length 24A of the host-vehicle 12 and the cargo 18 combined, a height 24B of the host-vehicle 12 and the cargo 18 combined, and a width 24C of the host-vehicle 12 and the cargo 18 combined, said controller-circuit 30 configured to operate the host-vehicle 12 in accordance with the size 24.

Step 130, COMPARE PRESENT-IMAGE TO STORED-IMAGE, may include comparing the present-image 28 to a stored-image 56 of the host-vehicle 12 with cargo 18 in an image-library 52 that specifies an identity 54 of cargo 18 depicted in the stored-image 56. The comparison may be performed using any of many known image processing algorithms.

Step 135, PRESENT-IMAGE CORRESPOND TO STORED-IMAGE IN IMAGE-LIBRARY?, may include the controller 30 or the processor 32 using a known image processing algorithm to determine if the present-image 28 corresponds, i.e. generally matches, any of the stored-images 56 in the image-library 52. If the present-image 28 does correspond to one of the stored-images 56 (YES), i.e. the cargo 18 is known, e.g. was previously transported by the host-vehicle 12, then the method 100 proceeds to step 150. If NO, then additional information about the cargo 18 may be requested (step 140) and/or the image-library 52 may be updated (step 145).

Step 140, REQUEST CHARACTERISTICS OF CARGO, may include requesting the characteristics 58 of the cargo 18 in response to a determination that the cargo 18 depicted in the present-image 28 does not correspond to any stored-image 56 in the image-library 52. The characteristics 58 may include, but are not limited to, the weight of the cargo 18, and/or the color of the cargo 18

Step 145, ADD PRESENT-IMAGE TO IMAGE-LIBRARY, may include adding the present-image 28 to the image-library 52 in response to a determination that the cargo 18 depicted in the present-image 28 does not correspond to any stored-image 56 in the image-library 52.

Step 150, BROADCAST SIZE, may include broadcasting the size 24 with a transceiver 46 so that other vehicles are fully aware that the host-vehicle 12 is transporting cargo that protrudes beyond the base-outline 20 of the host-vehicle 12.

Step 155, ADJUST VEHICLE-PARAMETERS, may include, but is not limited to, adjusting the suspension of the host-vehicle 12 to compensate for the increased load represented by the cargo 18, and/or adjusting the maximum cornering speed of the host-vehicle 12 for various radius corners, and/or adjusting the maximum braking distance to compensate for the increased load represented by the cargo 18, and or restricting which travel-lanes or roadways can be used by the host-vehicle 12.

Step 160, OPERATE HOST-VEHICLE, may include the controller 30 operating the vehicle-controls of the host-vehicle 12 to autonomously operate the steering, brakes, and accelerator of the host-vehicle 12, if the host-vehicle 12 is being operated in the automated-mode 14. Alternatively, if the host-vehicle 12 is being operated in the manual-mode, operating the host-vehicle 12 may merely include providing warnings to the operator 22 if the host-vehicle 12 with the cargo 18 is operated too close to an object such as another vehicle or a wall.

Described herein is a first device 30 that includes one or more processors 32; memory 34; and one or more programs 100 stored in memory, the one or more programs including instructions for performing all or part of the method 100. Also described herein is a non-transitory computer-readable storage-medium 34 comprising one or more programs 100 for execution by one or more processors 32 of a first device 30. The one or more programs 100 including instructions which, when executed by the one or more processors, cause the first device to perform all or part of the method 100.

Accordingly, a system 10, a controller 30 for the system 10, and a method 100 of operating the system 10 are provided. The size 24 of the host-vehicle 12 plus the cargo 18 carried by the host-vehicle, where the cargo 18 protrudes beyond or outside of the base-outline 20 of the host-vehicle 12, e.g. the host-vehicle without any cargo. The presence of the cargo 18 may be used to modify the behavior of the host-vehicle 12 when being operated in the automated-mode 14, and may be used to adjust vehicle dynamics of the host-vehicle 12 such a suspension damping and/or spring-rates/spring-preloads.

While this invention has been described in terms of the preferred embodiments thereof, it is not intended to be so limited, but rather only to the extent set forth in the claims that follow.

## Claims

1. A controller-circuit (30) comprising:
a camera (26) that renders a present-image (28) of a host-vehicle (12) loaded with cargo (18), said present-image (28) depicts the host-vehicle (12) and the cargo (18) carried by the host-vehicle (12), said cargo (18) protrudes beyond a base-outline (20) of the host-vehicle (12) without cargo (18);
a processor (32) in communication with the camera (26), said processor (32) configured to determine, in accordance with the present-image (28), a size (24) of the host-vehicle (12) and the cargo (18) combined, said size (24) indicative of at least one of a length (24A) of the host-vehicle (12) and the cargo (18) combined, a height (24B) of the host-vehicle (12) and the cargo (18) combined, and a width (24C) of the host-vehicle (12) and the cargo (18) combined, said processor (32) configured to operate the host-vehicle (12) in accordance with the size (24).

2. The controller-circuit (30) in accordance with claim 1, wherein the processor (32) is configured to communicate with a transceiver (46) that broadcasts an image-request (44).

3. The controller-circuit (30) in accordance with any of the previous claims, wherein the processor (32) is configured to communicate with a transceiver (46) that broadcasts the size (24).

4. The controller-circuit (30) in accordance with any of the previous claims, wherein the processor (32) is configured to communicate with an image-library (52) that specifies an identity (54) of cargo (18) depicted in a stored-image (56) of the host-vehicle (12) with cargo (18).

5. A system (10) for determining the overall size of a host-vehicle plus any cargo attached to a host-vehicle (12) comprising the controller-circuit (30) of nay one of the preceding claims.

6. The system (10) in accordance with claim 5, wherein the camera (26) is part of infrastructure (42), and the present-image (28) is transmitted to the controller-circuit (30) from the infrastructure (42).

7. The system (10) in accordance with claim 5, wherein the camera (26) is located on an other-vehicle (48), and the present-image (28) is transmitted to the controller-circuit (30) from the other-vehicle (48).

8. A method (100) of operating the system of any one of the claims 5 to 7 comprising:
rendering (115), with a camera (26), a present-image (28) of a host-vehicle (12) loaded with cargo (18), said present-image (28) depicts the host-vehicle (12) and the cargo (18) carried by the host-vehicle (12), said cargo (18) protrudes beyond a base-outline (20) of the host-vehicle (12) without cargo (18);
determining (125), in accordance with the present-image (28), a size (24) of the host-vehicle (12) and the cargo (18) combined, said size (24) indicative of at least one of a length (24A) of the host-vehicle (12) and the cargo (18) combined, a height (24B) of the host-vehicle (12) and the cargo (18) combined, and a width (24C) of the host-vehicle (12) and the cargo (18) combined; and
operating (160) the host-vehicle (12) in accordance with the size (24).

9. The method (100) in accordance with claim 8, wherein the method (100) includes broadcasting (110) an image-request (44) with a transceiver (46).

10. The method (100) in accordance with any of the claims 8 or 9, wherein the method (100) includes broadcasting (150) the size (24) with a transceiver (46).

11. The method (100) in accordance with any of the claims 8 to 10, wherein the method (100) includes comparing (130) the present-image (28) to a stored-image (56) of the host-vehicle (12) with cargo (18), said stored-image (56) in an image-library (52) that specifies an identity (54) of cargo (18) depicted in the stored-image (56).

12. The method (100) in accordance with claim 11, wherein the method (100) includes adding (145) the present-image (28) to the image-library (52) in response to a determination that the cargo (18) depicted in the present-image (28) does not correspond to any stored-image (56) in the image-library (52).

13. The method (100) in accordance with claims 11 or 12, wherein the method (100) includes requesting (140) characteristics (58) of the cargo (18) in response to a determination that the cargo (18) depicted in the present-image (28) does not correspond to any stored-image (56) in the image-library (52).

14. A first device (30) comprising:
one or more processors (32);
memory (34); and
one or more programs (100) stored in memory (34), the one or more programs (100) including instructions for performing the method (100) of any one of claims 8 to 13.

15. A non-transitory computer-readable storage-medium (34) comprising one or more programs (100) for execution by one or more processors (32) of a first device (30), the one or more programs (100) including instructions which, when executed by the one or more processors (32), cause the first device (30) to perform the method (100) of any of claims 8 to 13.
